# FASCICULE DE BREVET EUROPEEN

(11) **EP 0 846 657 B1**
(45) Date de publication et mention de la délivrance du brevet: **16.08.2000**
(21) Numéro de dépôt: 97402857.3
(22) Date de dépôt: 27.11.1997
(51) Int. Cl.: C01B 25/10

(54) **Synthèse du pentafluorure de phosphore par fluoration du trichlorure de phosphore**
Synthese von Phosphorpentafluorid durch Fluorierung von Phosphortrichlorid
Synthesis of phosphorus pentafluoride by fluorination of phosphorus trichloride

(30) Priorité: 03.12.1996 FR 9614808
(43) Date de publication de la demande: 10.06.1998
(73) Titulaire: ELF ATOCHEM S.A., 92800 Puteaux, Hauts-de-Seine (FR)
(72) Inventeur: Cheminal, Bernard, 69510 Soucieu-en-Jarrest (FR); Jaccaud, Michel, 69005 Lyon (FR); Joubert, Philippe, 69005 Lyon (FR); Bonnet, Philippe, 69007 Lyon (FR)
(74) Mandataire: Neel, Henry

(56) Documents cités:
- EP-A- 0 816 287
- PATENT ABSTRACTS OF JAPAN vol. 016, no. 479 (C-0992), 6 octobre 1992 & JP 04 175216 A (TOOKEMU PURODAKUTSU:KK), 23 juin 1992
- DATABASE WPI Section Ch, Week 9413 Derwent Publications Ltd., London, GB; Class E34, AN 94-106531 XP002035469 & JP 06 056 413 A (CENTRAL GLASS CO LTD) , 1 mars 1994

## Description

La présente invention a pour objet la fabrication en phase liquide du pentaflorure de phosphore par fluoration du trichlorure de phosphore avec du fluorure d'hydrogène (HF) anhydre en présence de chlore.

Le pentaflorure de phosphore (PF₅), gazeux à température ambiante, est utilisé par l'industrie électronique, intervient comme agent de fluoration dans diverses réactions chimiques mais surtout sert de matière première pour la fabrication de l'hexafluorophosphate de lithium (LiPF₆) dont la principale application industrielle concerne les électrolytes de batteries rechargeables de type lithium-ion dont le développement industriel s'avère prometteur.

Différents procédés de préparation du PF₅ ont été décrits dans la littérature parmi lesquels on peut citer :
* la fluoration du phosphore par le fluor (GROS, HAYMAN et STUART Trans. Faraday Soc. (1966), 62(10), 2716-18) ou par ClF₃ en milieu HF liquide (CLIFFORD BEACHELL et JACK J. lnorg. Nucl. Chem. (1957), 5, 57-70), toutes deux peu industrialisables étant donné la violence des réactions,
* la réaction de spath fluor sur l'acide phosphorique en présence de trioxyde de soufre (FR 2.086.784) dont le rendement n'atteint que 12 %,
* la fluoration du fluorure de phosphoryle (POF₃) par le fluorure d'hydrogène en présence de trioxyde de soufre (FR 2.082.502) dont les principaux inconvénients sont un rendement médiocre et la formation d'acide sulfurique, très corrosif en présence de HF,
* la fluoration du pentachlorure de phosphore (PCl₅) par le trifluorure d'arsenic (RUFF Die Chemie des Fluors (1929), 239) ou par le fluorure de calcium (DD290 889), par HF en phase liquide et/ou gazeuse (J60-251.109, J04-175.216, J06-056.413) ; mais la manipulation de PCl₅, solide très hygroscopique, est particulièrement délicate.

Aucun des procédés de fabrication de PF₅ connus à ce jour n'est à la fois facile à mettre en oeuvre (réactifs de manipulation courante et réaction chimique facilement maîtrisable) et permet d'assurer un taux de conversion en PF₅ élevé.

Le procédé selon l'invention se caractérise par une mise en oeuvre aisée étant donné qu'il se déroule en phase liquide dont on contrôle plus facilement les emballements que des procédés mettant en oeuvre des solide et des gaz et qu'il fait appel à des réactifs usuels dans la chimie des composés fluorés et enfin par un taux de conversion maximal en PF₅ ; ce procédé est caractérisé en ce qu'il comprend la fluoration du trichlorure de phosphore avec le fluorure d'hydrogène anhydre en phase liquide en présence de chlore et en ce que le rapport molaire Cl₂/PCl₃ est compris entre 1 et 1,2. Dans tout ce qui suit, par HF anhydre, on entend du fluorure d'hydrogène contenant moins de 100 ppm d'eau mais le procédé selon l'invention peut également utiliser de l'HF contenant jusqu'à 500 ppm d'eau.

Le procédé selon l'invention peut être mis en oeuvre de manière discontinue, mais il est avantageusement effectué de manière continue.

Le rapport molaire HF/PCl₃ est au moins égal à 5 et de préférence compris entre 6 et 30.

L'introduction du chlore au sein de l'appareillage réactionnel fonctionnant en mode continu ou discontinu peut s'effectuer soit à l'état liquide sous pression suffisante (typiquement 1 MPa à température ambiante), soit à l'état gazeux. Dans ce dernier cas, il se dissout dès qu'il entre en contact avec la masse réactionnelle.

La réaction peut s'effectuer, mais ce n'est pas nécessaire, en présence de catalyseur(s) de fluoration parmi lesquels on peut citer les acides de Lewis et/ou les acides forts organiques, les halogénures, oxydes et oxyhalogénures des éléments des groupes IVa et b, Va et b Vla et b et VIII. A titre d'exemple, on peut citer les acides paratoluènesulfonique, trifluoroacétique et triflique, les chlorures et fluorures tels que FeCl₃, AlCl₃, SbF₃, TiF₄, SnF₄, MoCl₅, TaF₅ et NbF_{5.} Leur concentration dans le milieu réactionnel doit rester compatible avec leur solubilité dans l'HF liquide anhydre et varie en général entre 0,005 et 10 %. De très bons résultats ont cependant été obtenus sans catalyseur, ce qui présente comme avantage d'éviter tout risque de corrosion dû au catalyseur proprement dit.

Selon un mode de fonctionnement discontinu, la réaction peut être réalisée dans un appareillage classique, bien connu de l'homme de l'art. Il peut s'agir d'un réacteur équipé d'un système d'agitation, d'une sonde thermométrique et muni de moyens de fermeture en matériau capable de résister à la pression et aux basses températures ; le matériau peut par exemple être choisi parmi les aciers ordinaires ou inoxydables, les alliages et notamment à base de chrome/nickel/fer/cuivre tels que ceux commercialisés sous les dénominations INCONEL®, MONEL® et HASTELLOY® C.

On préfère introduire les réactifs dans le réacteur à une température très inférieure à la température ambiante, de préférence inférieure ou égale à -30°C. On préfère également introduire les réactifs séparément en respectant de préférence l'ordre suivant : PCl₃ puis HF et enfin Cl₂.

Le mélange réactionnel est ensuite placé sous agitation dès que le mélange se liquéfie, l'agitation étant maintenue jusqu'à ce la pression maximale et la température ambiante soient atteintes.

Une fois le palier de pression maximale atteint, en général de l'ordre de 2 à 6 MPa, ce qui se produit en général au bout de quelques heures, on décomprime le contenu du réacteur et sépare les produits formés et/ou ceux n'ayant pas réagi. La décompression peut s'effectuer à l'aide d'un second réacteur -dans lequel on peut par exemple effectuer la synthèse de LiPF₆- ou bien à l'aide d'absorbeurs qui ont pour rôle d'absorber les gaz réactionnels dans un solvant approprié dont on aura préalablement éliminé toutes traces d'eau susceptible de provoquer l'hydrolyse de PF₅. A titre d'exemple de solvant pour les absorbeurs, on citera l'acétonitrile anhydre.

Selon un mode de fonctionnement continu, la réaction est effectuée dans un appareillage classique, bien connu de l'homme de l'art. Il peut s'agir d'un réacteur alimenté sous forme gazeuse et/ou liquide, par les matières premières et les recyclages et chauffé ou refroidi de manière adéquate. Il doit favoriser le contact entre les réactifs par une géométrie, un mode d'introduction des réactifs et une technique de mélange appropriés. La phase liquide en pied de réacteur peut être majoritairement composée d'HF liquide, mais elle peut tout aussi avantageusement être majoritairement composée de PCl₃ liquide. Selon une autre variante, on peut fonctionner en phase HCl liquide. Le réacteur peut être équipé d'un condenseur permettant notamment d'ajuster la concentration en HF.

La pression sous laquelle est mené le procédé selon l'invention n'est pas critique en elle-même, dès lors qu'elle permet d'effectuer la réaction en phase liquide, c'est-à-dire qu'elle est suffisante pour maintenir les réactifs présents dans le réacteur, essentiellement sous forme liquide. Elle varie en fonction de la température et de la composition du milieu réactionnel. La pression du système réactionnel est en général choisie entre 0,5 et 10 MPa et de préférence la réaction est effectuée à pression constante, le réacteur étant avantageusement pourvu d'un système de régulation de la pression approprié.

Le procédé selon l'invention peut être réalisé dans une large gamme de températures en général comprises entre - 40 et 100 °C, mais on préfère opérer au voisinage de la température ambiante.

Les flux issus de la réaction, gazeux et éventuellement liquides, sont traités de manière conventionnelle pour séparer PF₅ des autres produits issus de la réaction.

L'effluent gazeux brut de la réaction, constitué essentiellement de PF₅, HCl, éventuellement Cl₂ en faible concentration si un excès de chlore a été mis en oeuvre par rapport à la quantité de PCl₃ introduite, et HF entraîné, peut par exemple être absorbé dans une solution de LiF dans HF pour obtenir une solution de LiPF₆ dans HF. Afin d'isoler LiPF₆ solide, on peut alors traiter la solution de LiPF₆ dans HF selon des techniques connues de l'homme de l'art.

On peut doser les produits finis obtenus de manière conventionnelle telle que dosage des effluents des absorbeurs. D'autres méthodes d'analyse conventionnelles peuvent être utilisées parmi lesquelles on peut citer la chromatographie ionique pour le dosage des ions chlorures et/ou fluorures, par ICP (plasma à couplage inductif) pour le dosage du phosphore, par alcalimétrie pour le dosage des protons.

### EXEMPLES 1 A 3 fonctionnement discontinu

### EXEMPLE 1

Dans un réacteur en acier inoxydable de type 316 L de 800 ml susceptible de résister à une pression de 9,5 MPa, muni d'un barreau magnétique et plongé dans un vase de DEWAR contenant de l'azote liquide, on introduit dans l'ordre suivant:
- PCl₃ :: 27,5 g (200 mmoles)
- HF :: 80,4 g (4.020 mmoles)
- Cl₂ :: 19 g (268 mmoles).

Une fois le mélange des réactifs effectué, on retire le DEWAR et maintient le réacteur sous agitation dans une enceinte maintenue à la température ambiante.

On mesure la pression au sein du réacteur qui atteint 2 MPa au bout de 60 min puis se stabilise entre 2,1 et 2,2 MPa entre 60 et 108 min. La température de la phase liquide atteint + 22 °C et se stabilise à cette valeur.

De manière à s'assurer que la réaction est bien complète, on chauffe le réacteur jusqu'à 100 °C , la pression atteignant alors 4 MPa, puis on le refroidit vers 22 °C. On constate alors que la pression est identique à celle avant l'étape de chauffage ce qui indique qu'aucune réaction ultérieure ne s'est produite au sein du réacteur durant le cycle de chauffage/refroidissement.

Le contenu du réacteur est ensuite décomprimé lentement au moyen de 2 laveurs en série remplis de 194 g pour le premier et 196 g pour le second d'acétonitrile anhydre (déshydraté pendant 24 h sur tamis moléculaire de 3 Å). On prélève une partie aliquote (49,7 g) du premier laveur qui a absorbé 98,4 g de produits que l'on analyse par RMN ; une seconde partie aliquote (94,2 g soit 100 ml) est mélangée à 100,7 g d'eau bipermutée pour doser les ions chlorures et fluorures absorbés.

Le même type d'analyses est effectué au niveau du second laveur qui a absorbé 14,9 g de produits.

Les gaz non absorbés dans les 2 absorbeurs traversent un sécheur constitué de chlorure de calcium puis sont absorbés d'abord dans de l'eau (8,9 g) puis dans un mélange soude-sulfite de sodium, destiné à mesurer la teneur en chlore de ce flux gazeux ; il est connu de l'homme de l'art que dans un excès d'eau suffisant, PF₅ se transforme quantitativement en HF et H₃PO₄.

Une fois le dégazage du réacteur terminé, celui-ci est ouvert, aucune trace de corrosion n'est visible.

L'analyse RMN des effluents du premier laveur révèle la présence majoritaire de PF₆⁻ avec des traces de dérivés oxygénés de PF₅ et on note l'absence de PCl₃ PF₃ POF₃ et PCl₅. L'analyse des effluents du premier laveur donne, après addition d'eau :
H⁺ : 3.596 mmoles
F⁻ : 4.080 mmoles
Cl⁻: 403 mmoles

L'analyse des effluents du second laveur donne, après addition d'eau :
H⁺ : 442 mmoles
F⁻ : 21 mmoles
Cl⁻: 416 mmoles

L'analyse des effluents du laveur à eau donne :
H⁺ : 230 mmoles
F⁻ : 2,7 mmoles
Cl⁻: 180 mmoles

On constate qu'environ 1.000 mmoles de chlorure d'hydrogène se sont formées et donc et on en déduit que1.000/5 mmoles de PF₅ (complexé par HF sous forme d'ions PF₆⁻) ont été formées, ce qui correspond à un conversion totale en PF₅.

### EXEMPLE 2 synthèse de LiPF₆

Dans le même réacteur que celui décrit à l'exemple 1, on introduit 82,5 g de PCl₃, 243,8 g de HF et enfin 54,4 g de chlore. Le mélange réactionnel est refroidi et mélangé dans des conditions opératoires identiques à celles de l'exemple 1.

Après 100 min d'agitation du réacteur une fois le vase de DEWAR retiré, la température du liquide atteint 15 °C et la pression 2,8 MPa. Après une période d'environ 450 min, la température se stabilise à 21 °C et la pression à 3,5 MPa.

Un second réacteur identique au premier est chargé avec 14,3 g de fluorure de lithium (LiF) et 388 g de HF liquide anhydre sous une pression d'hélium de 0,3 MPa.

On procède ensuite au transfert des gaz du premier réacteur par absorption dans le second réacteur ; la décompression du premier réacteur due au transfert des gaz dans le second réacteur a lieu en 6 h et sa pression décroît de 3,5 à 0,5 MPa.

En sortie du second réacteur, on dispose en série un laveur à eau et un laveur soude-sulfite de sodium dans lesquels on dose les ions chlorures, fluorures et le phosphore. On décomprime ensuite le second réacteur au travers d'une série de 3 laveurs, le premier et le dernier sont des laveurs à eau tandis que le laveur intermédiaire est un laveur soude-sulfite de sodium, et on récupère dans le second réacteur 67 g de LiPF₆. On chauffe légèrement le contenu des réacteurs 1 et 2 à pression atmosphérique d'une part pour éliminer et transférer le contenu du premier réacteur dans le second, d'autre part pour évaporer le HF en excès dans le second réacteur.

Les résultats des dosages effectués sont les suivants :
- CI⁻ :: 2.923 mmoles dans le laveur 1
67 mmoles dans le laveur 3
10 mmoles dans le laveur 5
- Cl₂ :: 178 mmoles dans le laveur 2
- F⁻ :: 6.089 mmoles dans le laveur 1
20.083 mmoles dans le laveur 3
2.920 mmoles dans le laveur 5
- P :: 87 mmoles dans le laveur 1
136 mmoles dans le laveur 3
3 mmoles dans le laveur 5

Le rendement de la réaction en PF₅ est quantitatif (formation de 3.000 mmoles de HCI et de 3.000/5 mmoles de PF₅)

### EXEMPLE 3

On reprend les conditions opératoires de l'exemple 2 mais en opérant avec un excès plus faible en HF soit 4.200 mmoles de HF pour 600 mmoles de PCl₃ et 750 mmoles de Cl₂. Les dosages effectués à partir des effluents des laveurs montrent une conversion totale de PCl₃ en PF₅ en 450 min.

### EXEMPLES 4 A 6 fonctionnement en continu

### EXEMPLE 4

Dans un autoclave en acier inoxydable 316 L de 800 ml muni d'une double enveloppe dans laquelle circule un fluide de réfrigération (eau ou mélange eau/glycol), équipé d'une vanne de régulation de pression au moyen de laquelle on maintient une pression constante de 1,5 MPa au sein du réacteur, d'une sonde thermométrique et d'un système d'agitation par barreau magnétique et surmonté d'un condenseur, également en acier inoxydable 316 L, alimenté avec de l'eau à 18 °C sont chargés 400 g de HF liquide anhydre. La température du réacteur est maintenue à une température comprise entre la température ambiante (température des réactifs alimentant le réacteur) et 120 °C (température d'ébullition de HF sous 1,5 MPa).

Les réactifs sont introduits de la manière suivante :
PCl₃ est alimenté au moyen d'une pompe dont le débit est fixé à 1 M/h et est introduit dans la phase liquide du réacteur
HF est alimenté à l'aide d'une pompe haute pression à tête refroidie et est introduit à raison de 6 M/h dans la phase liquide du réacteur
Cl₂ est introduit dans la phase liquide du réacteur pour que le chlore puisse se dissoudre à raison de 1,2 M/h de Cl₂ par l'intermédiaire d'un mélange gazeux Cl₂/N₂ contenant 15 % en volume de Cl₂.

On maintient une température réactionnelle voisine de 40 °C. Une fois le régime stationnaire atteint, c'est-à-dire lorsque la pression au sein du réacteur atteint 1,5 MPa, et après 8 h de fonctionnement en continu dans les conditions ci-dessus, on soutire en continu le mélange brut N₂, PF₅ , HCl, Cl₂ et HF en tête du condenseur qui assure la recondensation de HF non entraîné et vaporisé étant donné l'exothermicité de la réaction. Les effluents soutirés sont envoyés vers des absorbeurs en série dont la teneur après absorption est mesurée et dont on prend soin de remplacer régulièrement le liquide absorbeur afin d'éviter sa saturation.

Le dosage des effluents des laveurs donne :
Cl⁻ dans les laveurs à eau : 41 moles
Cl⁻ dans les laveurs soude/sulfite : 3,2 moles
F⁻ dans les laveurs à eau : 48 moles (correspondant à PF₅ synthétisé et HF entraîné)
P dans les laveurs à eau : 8,1 moles

Le rendement de la réaction est total et sa productivité (ramenée au volume utile de réacteur soit 500 ml) est de 250g de PF₅/h∗I.

### EXEMPLE 5

Dans un autoclave en acier inoxydable 316 L de 800 ml muni d'une double enveloppe dans laquelle circule un fluide de réfrigération (eau ou mélange eau/glycol) surmonté d'un condenseur, également en acier inoxydable 316 L, alimenté avec un fluide de refroidissement à - 10 °C et équipé d'une sonde thermométrique, on charge initialement 790 g de PCl₃.

Puis les réactifs sont introduits de la manière suivante :
PCl₃ est alimenté au moyen d'une pompe dont le débit est fixé à 0,5 M/h et est introduit dans la phase liquide du réacteur
HF est alimenté à l'aide d'une pompe haute pression à tête refroidie et est introduit à raison de 2,53 M/h dans la phase liquide du réacteur
Cl₂ est introduit gazeux dans la phase liquide du réacteur à raison de 0,55 M/h de Cl₂.

La température dans le réacteur s'élève à 70 °C et celle du gaz en sortie du condenseur est de 0 °C.

Afin d'établir un bilan réactionnel, les gaz en sortie sont piégés durant un laps de temps donné dans 2 absorbeurs en série (soude et soude/sulfite) pour lesquels on dose respectivement P, Cl⁻, F⁻ d'une part et Cl⁻ d'autre part (Cl₂ étant réduit en Cl⁻).

Les analyses chimiques indiquent les débits horaires suivants :
- PF₅ :: 4 M/h
- HF :: 0,03 M/h
- HCI :: 2,5 M/h
- Cl₂ :: 0,05 M/h

### EXEMPLE 6

A l'aide de l'appareillage de l'exemple 4 mais maintenu à une pression constante de 1 MPa, on charge initialement 500 g d'HF liquide anhydre. Les réactifs sont ensuite introduits de façon similaire à celle des exemples 4 et 5 avec les débits horaires suivants :
- PCl₃ :: 4 M/h
- HF :: 20,8 M/h
- Cl₂ :: 4,8 M/h

On maintient la masse réactionnelle à environ 64 °C et celle des gaz effluents à 0 °C.

Le bilan réactionnel est réalisé comme dans l'exemple 5. Les analyses chimiques des gaz effluents indiquent les débits horaires suivants :
- PF₅ :: 4 M/h
- HF :: 0,8 M/h
- HCI :: 20 M/h
- Cl₂ :: 0,8 M/h

## Revendications

1. Procédé de préparation du pentafluorure de phosphore, caractérisé en ce qu'on opère en phase liquide par fluoration du trichlorure de phosphore avec de l'acide fluorhydrique anhydre en présence de chlore et en ce que le rapport molaire Cl₂/PCl₃ est compris entre 1 et 1,2.

2. Procédé selon la revendication 1, caractérisé en ce que le rapport molaire HF/PCl₃ est au moins égal à 5 et de préférence compris entre 6 et 30.

3. Procédé selon la revendication 1 ou 2, caractérisé en ce qu'il est mis en oeuvre de manière discontinue.

4. Procédé selon la revendication 3, caractérisé en ce qu'on introduit les réactifs au sein du réacteur à basse température, de préférence séparément et dans l'ordre suivant PCl₃ puis HF et enfin Cl₂, puis agite le mélange réactionnel jusqu'à ce que la pression soit constante puis décomprime lentement le réacteur et sépare les produits formés.

5. Procédé selon la revendication 1 ou 2, caractérisé en ce qu'il est mis en oeuvre de manière continue à une température comprise entre - 40 et 100 °C, et de préférence voisine de la température ambiante à une pression comprise entre 0,5 et 10 MPa et de préférence à pression constante.

## Claims

1. Process for the preparation of phosphorus pentafluoride, characterized in that it is performed in the liquid phase by fluorination of phosphorus trichloride with anhydrous hydrofluoric acid in the presence of chlorine and in that the Cl₂/PCl₃ molar ratio is between 1 and 1.2.

2. Process according to Claim 1, characterized in that the HF/PCl₃ molar ratio is at least equal to 5 and preferably between 6 and 30.

3. Process according to Claim 1 or 2, characterized in that it is carried out discontinuously.

4. Process according to Claim 3, characterized in that the reactants are introduced into the reactor at low temperature, preferably separately and in the following order: PCl₃ then HF and lastly Cl₂, and the reaction mixture is then stirred until the pressure is constant, then the reactor is depressurized slowly and the products formed are separated out.

5. Process according to Claim 1 or 2, characterized in that it is carried out continuously at a temperature of between -40 and 100°C and preferably in the region of room temperature, at a pressure of between 0.5 and 10 MPa and preferably at constant pressure.

## Patentansprüche

1. Verfahren zur Herstellung von Phosphorpentafluorid, dadurch gekennzeichnet, daß Phosphortrichlorid in flüssiger Phase mit wasserfreier Fluorwasserstoffsäure in Gegenwart von Chlor fluoriert wird und daß das Molverhältnis Cl₂/PCl₃ im Bereich von 1 bis 1,2 liegt.

2. Verfahren nach Anspruch 1, dadurch gekennzeichnet, daß das Molverhältnis HF/PCl₃ mindestens 5 beträgt und vorzugsweise im Bereich von 6 bis 30 liegt.

3. Verfahren nach Anspruch 1 oder 2, dadurch gekennzeichnet, daß es diskontinuierlich durchgeführt wird.

4. Verfahren nach Anspruch 3, dadurch gekennzeichnet, daß die Reagentien bei niedriger Temperatur vorzugsweise getrennt voneinander und in der Reihenfolge PCl₃, dann HF und schließlich Cl₂ in den Reaktor eingebracht werden und daß das Reaktionsgemisch dann gerührt wird, bis der Druck konstant ist, wonach der Druck in dem Reaktor langsam gesenkt wird und die gebildeten Produkte abgetrennt werden.

5. Verfahren nach Anspruch 1 oder 2, dadurch gekennzeichnet, daß es kontinuierlich bei einer Temperatur von -40 bis 100 °C und vorzugsweise etwa bei Umgebungstemperatur bei einem Druck von 0,5 bis 10 MPa und vorzugsweise bei konstantem Druck durchgeführt wird.
